# EUROPÄISCHE PATENTSCHRIFT

(11) **EP 3 490 752 B1**
(45) Veröffentlichungstag und Bekanntmachung des Hinweises auf die Patenterteilung: **31.08.2022**
(21) Anmeldenummer: 17745274.5
(22) Anmeldetag: 10.07.2017
(51) Int. Cl.: B23Q 1/70, B23Q 17/24, H01R 24/38, H01R 33/20

(54) **SPINDELANORDNUNG FÜR EINE WERKZEUGMASCHINE MIT EINEM OPTISCHEN ELEMENT SOWIE OPTISCHES ELEMENT, INSBESONDERE FÜR EINE DERARTIGE SPINDELANORDNUNG**
SPINDLE ARRANGEMENT FOR A MACHINE TOOL COMPRISING AN OPTICAL ELEMENT AND OPTICAL ELEMENT MORE PARTICULARLY FOR A SPINDLE ARRANGEMENT OF THIS TYPE
ENSEMBLE BROCHE POUR UNE MACHINE-OUTIL COMPRENANT UN ÉLÉMENT OPTIQUE AINSI QU'ÉLÉMENT OPTIQUE, EN PARTICULIER POUR UN ENSEMBLE BROCHE DE CE TYPE

(30) Priorität: 28.07.2016 DE 102016009237
(43) Veröffentlichungstag der Anmeldung: 05.06.2019
(73) Patentinhaber: Franz Kessler GmbH, 88422 Bad Buchau (DE)
(72) Erfinder: GERST, Manuel, 88400 Biberach an der Riss (DE); VAN SPRANG, Joachim, 88213 Ravensburg (DE); REINER, Stefan, 88521 Ertingen (DE)
(74) Vertreter: Otten, Roth, Dobler & Partner mbB Patentanwälte
(86) Internationale Anmeldenummer: PCT/EP2017/067233
(87) Internationale Veröffentlichungsnummer: WO 2018/019551

(56) Entgegenhaltungen:
- EP-A2- 0 800 703
- DE-B3-102012 023 328
- DE-U1- 20 013 242
- US-A1- 2012 170 246

## Beschreibung

Die vorliegende Erfindung betrifft eine Spindelanordnung für eine Werkzeugmaschine, umfassend ein in die Werkzeugmaschine einsetzbares und fixierbares Spindelgehäuse, in der eine Spindelwelle aufgenommen ist, und einen von dem Spindelgehäuse vorstehenden Spindelkopf mit einer Koppeleinrichtung zum Koppeln eines Werkzeugs mit der Spindelwelle.

Derartige Spindelanordnungen sind aus dem Stand der Technik bekannt und werden in verschiedenen Werkzeugmaschinen eingesetzt, beispielsweise in Drehmaschinen oder Fräsmaschinen. Es hat sich gezeigt, dass insbesondere in komplexen Werkzeugmaschinenanordnungen modular aufgebaute Spindelanordnungen eingesetzt werden, die zu Wartungszwecken oder zum vollständigen Ersatz separat aus der Werkzeugmaschine entnommen werden können. Mit anderen Worten sind derartige Spindelanordnungen als separate Module ausgebildet, die in unterschiedlichen Konfigurationen zur Verfügung gestellt werden.

Im Rahmen moderner Fertigungsverfahren ist es üblich, den Bearbeitungsort eines Werkstücks mit zusätzlichen Leuchtmitteln auszuleuchten und gegebenenfalls mit optischen Überwachungsmitteln, wie beispielsweise Kameras oder dergleichen, optisch zu überwachen. Diese optischen Komponenten werden in der Regel separat als eigene Systeme in der Werkzeugmaschine angebracht. Dies führt zu einem zusätzlichen gerätetechnischen Aufwand.

Das Dokument DE 10 2014 113 051 A1 beschreibt eine Spindelanordnung mit einem Bildverarbeitungssystem und einer Lichtquelle am Spindelkopf.

Das Dokument DE 10 2012 023 328 B3 beschreibt ebenfalls eine Spindelanordnung, bei der am Spindelkopf eine Kamera mit einer Stroboskop-Lampe verlagerbar angebracht ist.

Ferner zeigt das Dokument DE 10 2008 046 621 A1 eine Spindelanordnung, bei der eine Kamera spindelnah angeordnet ist.

Der Stand der Technik gemäß DE 10 2010 025 900 A1 beschreibt eine Arbeitsspindel, bei der Abstandssensoren stirnseitig vorgesehen sind.

Das Dokument JP 2005-028461 A beschreibt schließlich eine Spindelanordnung mit einem umlaufenden Beleuchtungsschirm am Spindelkopf.

Ferner offenbart das Dokument US 2012/0170246 A1, das die Basis für den Oberbegriff des Anspruchs 1 bildet, eine Spindelanordnung für eine Werkzeugmaschine, die über eine an einem Spindelkopf anbringbare Ringlampe verfügt. Die Ringlampe ist mit mehreren LEDs bestückt, die in Aufnahmelöcher eines Lampenhalters der Ringlampe eingesteckt sind.

Außerdem offenbart WO 97/15940 eine elektrische Lampe mit einem Lampenkopf und einem Grundkörper, der in eine Ausnehmung einsteckbar ist. An seiner Stirnseite weist der Grundkörper zwei Kontakte auf, von denen einer auf einer Mittelachse des Grundkörpers angeordnet ist und der andere auf einem konzentrischen Kreis um die Mittelachse.

Die Erfindung zielt darauf ab, derartige Spindelanordnungen sowohl während der Montage bzw. Wartung als auch im Betrieb noch komfortabler mit Zusatzfunktionen auszugestalten.

Gemäß der Erfindung ist zur Lösung dieser Aufgabe eine Spindelanordnung mit den Merkmalen des Anspruchs 1 vorgesehen.

Anders als beim Stand der Technik sieht die vorliegende Erfindung vor, an der Spindelanordnung selbst integral wenigstens ein optisches Element anzuordnen, das zur Ausleuchtung oder/und zur optischen Überwachung des Arbeitsbereichs dient. Der Vorteil der vorliegenden Erfindung besteht darin, das wenigstens eine optische Element nahe am Bearbeitungsbereich anzuordnen, ohne dass zusätzliche Komponenten innerhalb der Werkzeugmaschine störend angeordnet werden müssen. Die integrale Anordnung des wenigstens einen optischen Elements reduziert substantiell den gerätetechnischen Aufwand und vereinfacht die Werkzeugmaschine erheblich.

Durch die Anbringung einer Ausnehmung am Spindelkopf es möglich, das optische Element geschützt und nahe an dem Bearbeitungsbereich anzuordnen.

Ferner ist erfindungsgemäß vorgesehen, dass die Ausnehmung mit einem Gewinde versehen ist und dass das optische Element in die Ausnehmung am Spindelkopf einschraubbar ist. Dadurch wird eine besonders einfache, wartungsfreundliche und zuverlässige Anbringung des optischen Elements am Spindelkopf gewährleistet.

In diesem Zusammenhang ist es gemäß der vorliegenden Erfindung möglich, dass das optische Element mit einer Dichtungsanordnung versehen ist, die mit dem Spindelkopf dichtend zusammenwirkt. So kann das optische Element beispielsweise mit einem O-Ring versehen sein, der an einer an einen Gewindeschaft des optischen Elements angrenzenden Schulter angeordnet ist. Auch kann die Dichtungsanordnung integral am optischen Element ausgebildet sein.

Im Hinblick auf eine einfache Montage und eine zuverlässige Funktionsweise der Erfindung ist besonderes Augenmerk auf die elektrische Kontaktierung des aktiven optischen Elements zu richten. Wie vorstehend bereits angedeutet, ist vorgesehen, das optische Element einfach in eine Ausnehmung im Spindelkopf einzuschrauben. In diesem Zusammenhang ist es erfindungsgemäß vorgesehen, dass das optische Element an seinem in die Ausnehmung einschraubbaren Ende stirnseitig mit wenigstens zwei auf unterschiedlichen radialen Niveaus bezüglich der Einschraubachse angeordneten Kontakten versehen ist. Alternativ hierzu kann vorgesehen sein, dass das optische Element an seiner Umfangsfläche wenigstens zwei räumlich voneinander getrennt ausgebildete Kontakte aufweist.

Ferner ist bei dieser Ausführungsform der Erfindung vorgesehen, dass in der Ausnehmung eine Gegenkontaktanordnung fixiert ist, an der Gegenkontakte stirnseitig auf entsprechend unterschiedlichen radialen Niveaus oder in unterschiedlichen axialen Bereichen bezüglich der Einschraubachse angeordnet sind. Die Gegenkontaktanordnung kann in Form einer Platine mit kreisrunden konzentrischen Gegenkontaktflächen ausgebildet sein, die fest in einer Aufnahmeausnehmung im Spindelkopf fixiert ist, beispielsweise durch Verkleben. Die Platine ist je nach Funktion des optischen Elements entsprechend an die Spindelelektronik angekoppelt. Bei einer derartigen Ausgestaltung wird das optische Element in die Ausnehmung eingeschraubt, wobei die jeweiligen Kontakte, die an der Rückseite des optischen Elements in verschiedenen radialen Bereichen angeordnet sind, unabhängig von ihrer durch das Einschrauben bedingten Winkelstellung stets mit dem richtigen Gegenkontakt auf der Platine kontaktierend in Eingriff gelangen. Bei Anbringung der Kontakte an der Umfangsfläche des optischen Elements sind die Gegenkontaktflächen in einem zylindrischen Bereich der Aufnahmeausnehmung vorgesehen.

Vorzugsweise sieht die Erfindung dabei vor, dass die Kontakte oder/und die Gegenkontakte federvorgespannt sind. Die Federvorspannung der Kontakte oder/und der Gegenkontakte sorgt innerhalb eines vorbestimmten Bereichs der Einschraubtiefe des optischen Elements für einen zuverlässigen elektrischen Kontakt.

Gemäß einer Ausführungsvariante der Erfindung kann vorgesehen sein, dass das optische Element eine lichtemittierende Komponente umfasst, insbesondere ein LED-Leuchtmittel, eine Laserdiode oder dergleichen. Derartige optische Elemente können zur Ausleuchtung des Bearbeitungsbereichs verwendet werden. Auch können mit derartigen optischen Elementen, beispielsweise durch Verwendung eines fokussierten Laserstrahls, Zusatzfunktionen realisiert werden, wie beispielsweise die Realisierung von Ausrichtungshilfen oder Messverfahren, insbesondere ein Triangulationsverfahren.

Ferner kann erfindungsgemäß vorgesehen sein, dass das optische Element einen optischen Sensor umfasst, insbesondere eine Lichtschranke, einen CCD-Sensor, eine Kamera oder dergleichen. Zusätzlich oder alternativ zu wenigstens einem optischen Element zur Ausleuchtung des Arbeitsbereichs kann gemäß dieser Ausführungsvariante der Erfindung auch wenigstens ein optisches Element vorgesehen sein, das zur optischen Erfassung des Arbeitsbereichs am Spindelkopf dient. So kann beispielsweise über eine geeignete Kamera der aktuelle Bearbeitungszustand erfasst oder überprüft werden.

Eine Weiterbildung der Erfindung sieht vor, dass das optische Element eine Fokussierlinse oder eine Streulinse umfasst.

Ferner kann erfindungsgemäß vorgesehen sein, dass das optische Element mit einem Gehäuse aus beständigem Material, insbesondere aus Metall, wie beispielsweise Edelstahl, oder aus Kunststoff hergestellt ist. Wie vorstehend angedeutet, kann beispielsweise in einem Kunststoffgehäuse eine Dichtanordnung integriert sein.

Zur einfachen Handhabung sieht die optische Komponente gemäß der vorliegenden Erfindung in einer Weiterbildung vor, dass das Gehäuse mit einem profilierten Außenumfang, insbesondere mit einem polygonal profilierten Außenumfang ausgebildet ist. Dadurch kann die optische Komponente einfacher in das Spindelgehäuse eingeschraubt bzw. aus diesem ausgeschraubt werden.

Gemäß einer bevorzugten Ausführungsvariante der Erfindung ist am Spindelkopf an einer Stirnfläche oder/und an einer Umfangsfläche desselben wenigstens ein optisches Element, vorzugsweise eine Mehrzahl von optischen Elementen, vorgesehen, wobei das wenigstens eine optische Element in einer vorbestimmten Ausrichtung Licht in den Bereich der Ankopplung eines Werkzeugs ausstrahlt, wobei die Lichtausstrahlung vorzugsweise kegelförmig oder strahlförmig ausgerichtet ist. Je nach Bedarf lässt sich die Lichtausstrahlung des optischen Elements hinsichtlich Form und Fokussierung durch geeignete optische Mittel, wie beispielsweise Linsen, Blenden, Filter oder dergleichen beeinflussen.

Die Erfindung betrifft ferner ein optisches Element mit den Merkmalen des Anspruchs 12.

Im Folgenden wird ein Ausführungsbeispiel der vorliegenden Erfindung anhand der beiliegenden Figuren erläutert. Es stellen dar:
- Fig. 1: eine perspektivische Teilansicht eine Spindelkopfes einer Spindelanordnung gemäß der vorliegenden Erfindung;
- Fig. 2: eine Darstellung entsprechend Figur 1 mit angedeutetem Strahlkegel einer erfindungsgemäßen Spindelanordnung mit LED;
- Fig. 3: eine Seitenansicht der erfindungsgemäßen Spindelanordnung mit angedeutetem Strahlkegel;
- Fig. 4: eine Seitenansicht eines erfindungsgemäßen optischen Elements, ausgebildet als LED, mit in der erfindungsgemäßen Spindelanordnung anbringbarer Kontaktplatine;
- Fig. 5: das optische Element der vorliegenden Erfindung gemäß Figur 4 in perspektivischer Rückansicht;
- Fig. 6: die Kontaktplatine gemäß Figur 4 mit Zuleitung in perspektivischer Vorderansicht; und
- Fig. 7: eine schematische Teilschnittansicht des erfindungsgemäßen optischen Elements, eingeschraubt in den Spindelkopf.

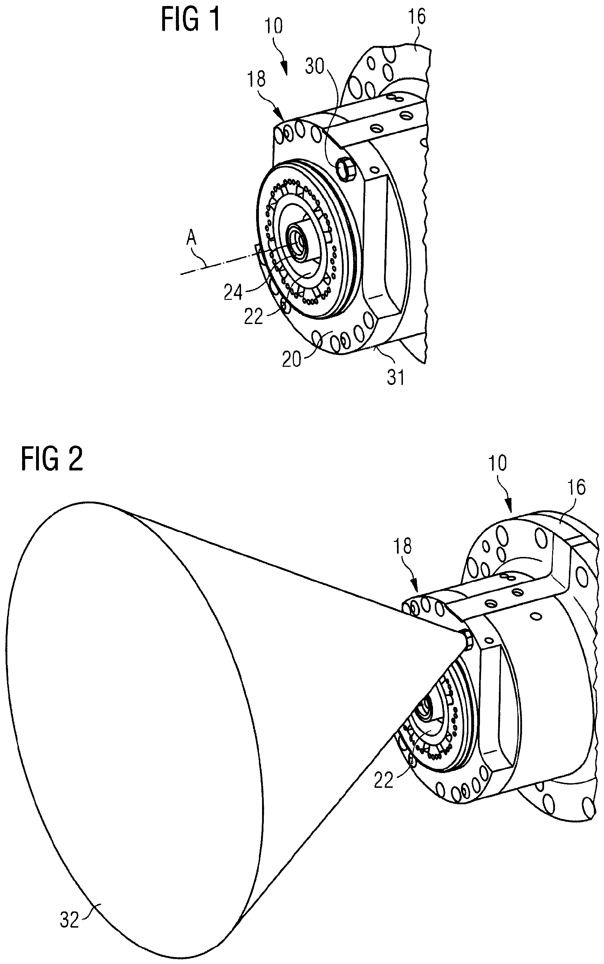

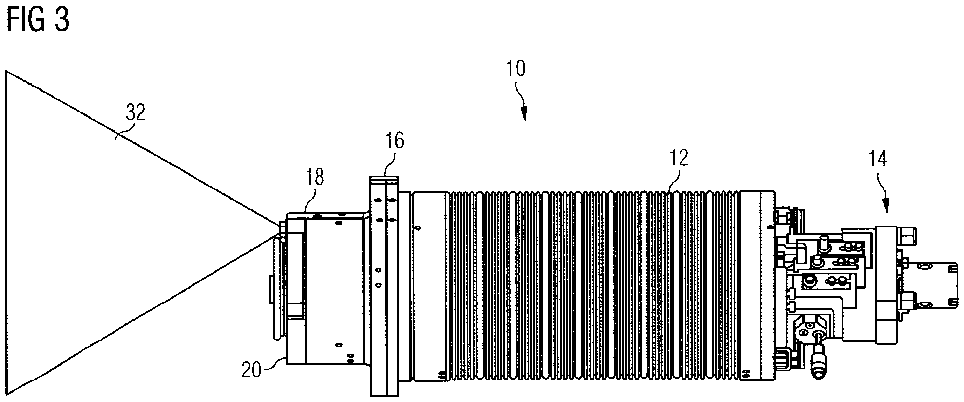

In den Figuren 1 bis 3 ist eine erfindungsgemäße Spindelanordnung in verschiedenen Ansichten gezeigt und allgemein mit 10 bezeichnet. Diese umfasst ein Spindelgehäuse 12, das in einer entsprechenden Ausnehmung einer nicht gezeigten Werkzeugmaschine angebracht werden kann. Das Spindelgehäuse 12 weist an seinem in Figur 3 rechten Ende eine Vielzahl von hydraulischen, pneumatischen und oder elektrischen Anschlüssen 14 auf, über die die Spindelanordnung in bekannter Weise ansteuerbar ist.

Die Spindelanordnung 10 ist als eigenes Modul aufgebaut. Im Spindelgehäuse 12 ist in an sich bekannter Weise ein motorischer Antrieb vorgesehen. Das Spindelgehäuse 12 weist einen Gehäuseflansch 16 auf, mit dem die Spindelanordnung 10 an der Werkzeugmaschine fixierbar ist. An den Gehäuseflansch 16 schließt sich ein Spindelkopf 18 an, der eine Stirnseite 20 aufweist. In der Stirnseite 20 ist eine Ausnehmung 22 vorgesehen, aus der sich ein Koppelabschnitt 24 heraus erstreckt. Der Koppelabschnitt 24 ist fest mit der drehbar angetriebenen Spindelwelle der Spindelanordnung 10 gekoppelt und dient dazu, ein nicht gezeigtes Werkzeug, beispielsweise einen Fräser oder eine Werkstückaufnahme mit der Spindelwelle zu koppeln, wobei dieses Werkzeug später zur Werkstückbearbeitung über die Spindelwelle drehantreibbar ist. In Figur 1 ist die Drehachse A der Werkzeugspindel angedeutet.

Ferner erkennt man, dass im Bereich der Stirnseite 20 ein optisches Element 30 angebracht ist. Im dargestellten Fall handelt es sich bei dem optischen Element 30 um einen LED-Leuchtkörper. Dieser ist bei Betrachtung der Stirnseite 20 von vorne etwa in 1:00 Uhr Position angeordnet und strahlt, wie in Figuren 2 und 3 gezeigt, Licht in einem Strahlkegel 32 in den Bereich vor den Koppelabschnitt 24, d.h. in den Bereich, in dem das Werkzeug angeordnet ist. In diesem Bereich finden üblicherweise eine Werkstückbearbeitung statt. Die Anordnung des optischen Elements 30 gemäß dieser Ausführungsform ist lediglich beispielhaft. Es können beliebig viele gleichartige oder unterschiedliche optische Elemente vorgesehen sein und in unterschiedlichen Winkellagen und radialen Niveaus an der Stirnseite 20 oder im Bereich einer Umfangsfläche 31 des Spindelkopfes 18 angebracht werden.

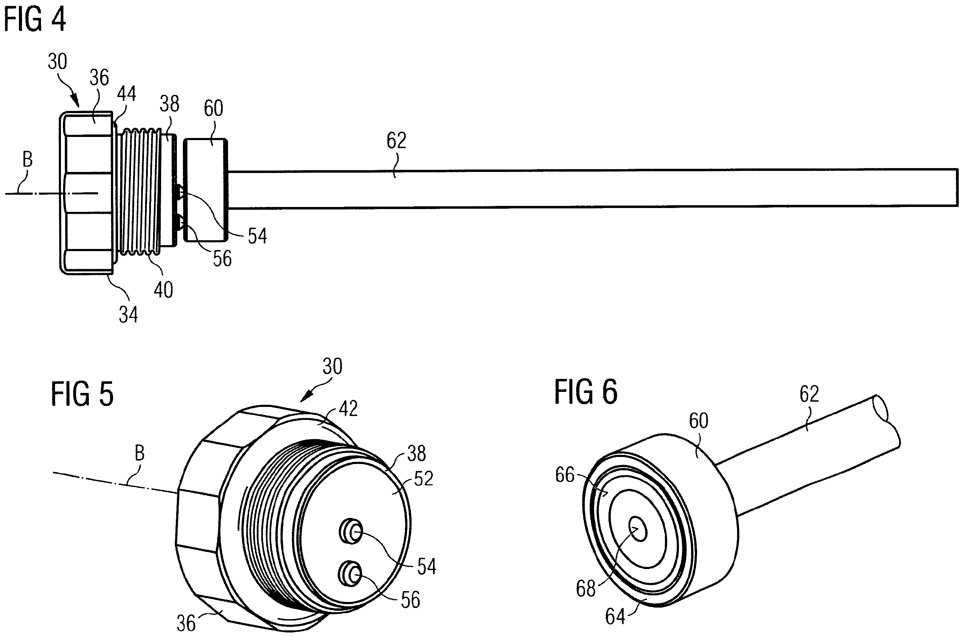

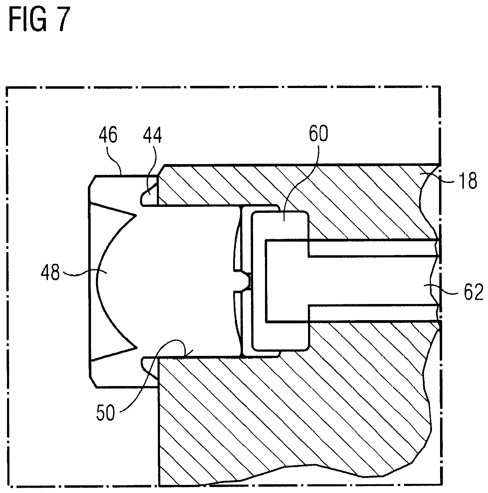

Im Folgenden wird auf die Besonderheiten des optischen Elements 30 und dessen Anbringung im Spindelkopf 18 mit Bezug auf Figuren 4 bis 7 eingegangen. Man erkennt in den Figuren 4 und 5, dass das optische Element 30 ein Gehäuse 34 aufweist, das in seinem vorderen, vom Spindelkopf 30 abstehenden Bereich mit einem polygonal profilierten Außenumfangsabschnitt 36 versehen ist. Radial einwärts versetzt von diesem Außenumfangsabschnitt 36, jedoch konzentrisch zu diesem angeordnet, ist ein zylindrischer Schaftabschnitt vorgesehen, der eine Außengewindeformation 40 aufweist. Das Gewinde 40 erstreckt sich derart, dass das optische Element 30 entlang einer Einschraubachse B in eine mit einem entsprechenden Innengewinde versehene Ausnehmung 50 im Spindelkopf 18 einschraubbar ist. Durch diese Anordnung des Gehäuses 34 bildet sich eine Schulter 42 aus, in deren Bereich eine ringförmige Dichtungsanordnung 44 angeordnet ist. Gemäß Figur 7 erkennt man, dass die Dichtungsanordnung 44 ein in einer beispielsweise konusförmigen Hinterschneidung 46 aufgenommener O-Ring ist. Ferner erkennt man in Figur 7, dass das optische Element mit einer konvex gekrümmten Streulinse 48 ausgebildet ist.

An seiner Rückseite 52 weist das optische Element zwei federnd vorgespannte elektrische Kontakte 54, 56 auf, die auf unterschiedlichen radialen Niveaus bezüglich der Achse B angeordnet sind. Diese elektrischen Kontakte 54, 56 dienen zur elektrischen Kontaktierung des optischen Elements 30. Ferner erkennt man in den Figuren 4, 6 und 7 eine Platine 60 mit einer elektrischen Anschlussleitung 62. Diese Platine 60 ist fest in dem Spindelkopf 18 fixiert, beispielsweise durch Verkleben. An ihrer Stirnseite 64 weist die Platine 60 eine erste kreisringförmige metallische Kontaktfläche 66 und eine hierzu konzentrisch angeordnete, jedoch davon beabstandete zweite kreisrförmige metallische Kontaktfläche 68 auf. Diese beiden metallischen Kontaktflächen 66, 68 sind derart bezüglich der Einschraubachse B auf unterschiedlichen radialen Niveaus angeordnet, dass der Kontakt 54 unabhängig von dem aktuellen Einschraubwinkel der LED 30 in Kontakt mit der Kontaktfläche 66 gelangt und dass der Kontakt 56 unabhängig von dem aktuellen Einschraubwinkel der LED 30 in Kontakt mit der Kontaktfläche 68 gelangt. Sobald die beiden Kontakte 54 und 56 mit jeweils zugehörigen Kontaktfläche 66 und 68 in Berührung gelangen und die LED 30 weiter in die Ausnehmung 50 eingeschraubt wird, geben die Kontakte 54 und 56 gemäß ihrer Federvorspannung nach und sorgen für einen zuverlässigen elektrischen Kontakt zu der jeweiligen Kontaktfläche 66 bzw. 68 zur elektrischen Versorgung der LED 30.

Durch diese Art der Anordnung lässt sich die LED 30 oder jedes beliebige andere optische Element schnell und zuverlässig einsetzen, kontaktieren oder austauschen. Es versteht sich, dass nach Maßgabe des jeweils verwendeten optischen Elements von zwei abweichende Anzahl derartiger Kontakte verwendet werden kann, wobei dann auf der Kontaktplatine 60 entsprechend viele Kontaktflächen vorgesehen sein müssen.

Erfindungsgemäß kann neben der vorstehend beschriebenen LED jedes beliebige optische Element eingesetzt werden, das heißt lichtemittierende optische Elemente aber auch anderweitig aktive empfangende optische Elemente, wie etwa Kameras, optische Sensoren oder dergleichen.

Mit der erfindungsgemäßen Anordnung der LED 30 oder anderer optischer Elemente auf der Stirnseite des Spindelkopfes ist eine raumsparende, kompakte und einfach zu wartende Anbringung des jeweiligen optischen Elements in unmittelbarer Nähe zum Bearbeitungsbereich möglich. Die optischen Elemente lassen sich lediglich zur Ausleuchtung des Bearbeitungsbereichs verwenden, aber auch zu weiteren Zwecken wie zur Vermessung oder/und Positionierung von Werkstücken oder Werkzeugen sowie zur bildlichen Überwachung Fertigungsvorgängen einsetzen.

Die Erfindung betrifft ferner das optische Element selbst, insbesondere in seiner speziellen Anbringung an der Stirnseite des Spindelkopfes.

## Patentansprüche

1. Spindelanordnung (10) für eine Werkzeugmaschine, umfassend ein in die Werkzeugmaschine einsetzbares und fixierbares Spindelgehäuse (12), in der eine Spindelwelle aufgenommen ist, und einen von dem Spindelgehäuse (12) vorstehenden Spindelkopf (18) mit einer Koppeleinrichtung (24) zum Koppeln eines Werkzeugs mit der Spindelwelle, wenigstens ein optisches Element (30), das an dem Spindelkopf (18) anordenbar ist, und das dazu ausgebildet ist, im Bereich des Spindelkopfes (18) Licht zu emittieren oder/und einen Bereich nahe dem Spindelkopf (18) optisch zu erfassen, **dadurch gekennzeichnet, dass** am Spindelkopf (18) wenigstens eine Ausnehmung (50) vorgesehen ist, in die das optische Element (30) einsetzbar ist, wobei das optische Element (30) in die Ausnehmung am Spindelkopf (18) einschraubbar und darin fixierbar ist, wobei das optische Element (30) an seinem in die Ausnehmung (50) einschraubbaren Ende mit wenigstens zwei stirnseitig auf unterschiedlichen radialen Niveaus oder mit in unterschiedlichen axialen Bereichen bezüglich der Einschraubachse (B) angeordneten Kontakten (54, 56) versehen ist.

2. Spindelanordnung (10) nach Anspruch 1, wobei das optische Element (30) , wenn mit in unterschiedlichen axialen Bereichen bezüglich der Einschraubachse angeordneten Kontakten versehen, wenigstens zwei von den Kontakten an seiner Umfangsfläche räumlich voneinander getrennt aufweist.

3. Spindelanordnung (10) nach Anspruch 1 oder 2, wobei in der Ausnehmung (50) eine Gegenkontaktanordnung (60) fixiert ist, an der Gegenkontakte (66, 68) auf entsprechend unterschiedlichen radialen Niveaus oder in verschiedenen axialen Bereichen bezüglich der Einschraubachse (B) angeordnet sind.

4. Spindelanordnung (10) nach einem der vorangehenden Ansprüche, wobei die Kontakte (54, 56) oder/und die Gegenkontakte (66, 68) federvorgespannt sind.

5. Spindelanordnung (10) nach einem der vorangehenden Ansprüche, wobei das optische Element (30) eine lichtemittierende Komponente umfasst, insbesondere ein LED-Leuchtmittel, eine Laserdiode oder dergleichen.

6. Spindelanordnung (10) nach einem der vorangehenden Ansprüche, wobei das optische Element (30) einen optischen Sensor umfasst, insbesondere eine Lichtschranke, einen CCD-Sensor, eine Kamera oder dergleichen.

7. Spindelanordnung (10) nach einem der vorangehenden Ansprüche, wobei das optische Element (30) eine Fokussierlinse oder eine Streulinse (48) umfasst.

8. Spindelanordnung (10) nach einem der vorangehenden Ansprüche, wobei das optische Element (30) mit einer Dichtungsanordnung (44) versehen ist, die mit dem Spindelkopf (18) dichtend zusammenwirkt.

9. Spindelanordnung (10) nach einem der vorangehenden Ansprüche, wobei das optische Element (30) mit einem Gehäuse aus beständigem Material, insbesondere aus Metall, wie beispielsweise Edelstahl, oder aus Kunststoff hergestellt ist.

10. Spindelanordnung (10) nach Anspruch 9, wobei das Gehäuse mit einem profilierten Außenumfang (36), insbesondere mit einem polygonal profilierten Außenumfang, ausgebildet ist.

11. Spindelanordnung (10) nach einem der vorangehenden Ansprüche, wobei an dem Spindelkopf (18) an einer Stirnfläche und/oder an einer Umfangsfläche (31) das wenigstens eine optische Element (30), vorzugsweise eine Mehrzahl von optischen Elementen vorgesehen ist, wobei das wenigstens eine optische Element (30) in einer vorbestimmten Ausrichtung Licht in dem Bereich der Ankopplung eines Werkzeugs ausstrahlt, wobei die Lichtausstrahlung vorzugsweise kegelförmig oder strahlförmig ausgerichtet ist.

12. Optisches Element (30), das dazu ausgebildet ist, Licht zu emittieren oder/und einen Bereich optisch zu erfassen, wobei das optische Element (30) in eine Ausnehmung (50) einschraubbar und darin fixierbar ist, wobei das optische Element (30) an seinem in die Ausnehmung (50) einschraubbaren Ende mit wenigstens zwei stirnseitig auf unterschiedlichen radialen Niveaus bezüglich einer Einschraubachse (B) angeordneten Kontakten (54, 56) versehen ist.

## Claims

1. Spindle arrangement (10) for a machine tool, comprising a spindle housing (12), which is able to be placed and secured in the machine tool, in which a spindle shaft is accommodated, and a spindle head (18), projecting from the spindle housing (12), having a coupling device (24) for coupling a tool to the spindle shaft, at least one optical element (30), which is able to be arranged at the spindle head (18) and is embodied to emit light in the region of the spindle head (18) and/or to optically capture a region near the spindle head (18),
**characterized in that**
at least one recess (50), in which the optical element (30) is able to be placed, is provided at the spindle head (18), wherein the optical element (30) is able to be screwed into the recess at the spindle head (18) and to be secured therein,
wherein the optical element (30) is provided, at its end that is able to be screwed into the recess (50), with at least two contacts (54, 56), which are arranged on the front face at different radial levels or in different axial regions with respect to the screw-in axis (B).

2. Spindle arrangement (10) according to Claim 1, wherein the optical element (30), if provided with contacts arranged in different axial regions with respect to the screw-in axis, has at least two of the contacts on its circumferential surface, spatially separated from one another.

3. Spindle arrangement (10) according to Claim 1 or 2, wherein a counter-contact arrangement (60) is secured in the recess (50), at which counter-contacts (66, 68) are arranged at correspondingly different radial levels or in different axial regions with respect to the screw-in axis (B).

4. Spindle arrangement (10) according to any of the preceding claims, wherein the contacts (54, 56) or/and the counter-contacts (66, 68) are spring-pretensioned.

5. Spindle arrangement (10) according to any of the preceding claims, wherein the optical element (30) comprises a light-emitting component, in particular an LED light-emitting means, a laser diode or the like.

6. Spindle arrangement (10) according to any of the preceding claims, wherein the optical element (30) comprises an optical sensor, in particular a light barrier, a CCD sensor, a camera or the like.

7. Spindle arrangement (10) according to any of the preceding claims, wherein the optical element (30) comprises a focusing lens or a diffusion lens (48).

8. Spindle arrangement (10) according to any of the preceding claims, wherein the optical element (30) is provided with a sealing arrangement (44), which co-acts in a sealing manner with the spindle head (18).

9. Spindle arrangement (10) according to any of the preceding claims, wherein the optical element (30) is produced with a housing made from a durable material, in particular from metal, for example stainless steel, or from plastic.

10. Spindle arrangement (10) according to Claim 9, wherein the housing is embodied with a profiled outer circumference (36), in particular with a polygonally profiled outer circumference.

11. Spindle arrangement (10) according to any of the preceding claims, wherein the at least one optical element (30), preferably a plurality of optical elements, is/are provided at the spindle head (18) on a front face and/or on a circumferential surface (31), wherein the at least one optical element (30) in a predetermined alignment emits light in the region of a coupling point of a tool, wherein the light emission is preferably aligned in the shape of a cone or a beam.

12. Optical element (30), which is embodied to emit light or/and to optically capture a region, wherein the optical element (30) is able to be screwed into a recess (50) and to be secured therein, wherein the optical element (30) is provided, at its end which is able to be screwed into the recess (50), with at least two contacts (54, 56), which are arranged on the front side at different radial levels with respect to a screw-in axis (B) .

## Revendications

1. Agencement de broche (10) pour une machine-outil, comprenant un carter de broche (12) pouvant être inséré et fixé dans la machine-outil, dans lequel est logé un arbre de broche, et une tête de broche (18) faisant saillie à partir du carter de broche (12) et pourvue d'un dispositif d'accouplement (24) servant à accoupler un outil à l'arbre de broche,
au moins un élément optique (30) qui peut être disposé sur la tête de broche (18) et qui est réalisé pour émettre de la lumière dans la zone de la tête de broche (18) ou/et pour détecter optiquement une zone à proximité de la tête de broche (18),
**caractérisé en ce que** sur la tête de broche (18) est prévu au moins un évidement (50) dans lequel l'élément optique (30) peut être inséré,
l'élément optique (30) pouvant être vissé et fixé dans l'évidement sur la tête de broche (18),
l'élément optique (30) étant pourvu à son extrémité pouvant être vissée dans l'évidement (50) d'au moins deux contacts (54, 56) disposés sur la face frontale sur différents niveaux radiaux ou dans différentes zones axiales par rapport à l'axe de vissage (B).

2. Agencement de broche (10) selon la revendication 1, dans lequel l'élément optique (30), lorsqu'il est pourvu de contacts disposés dans différentes zones axiales par rapport à l'axe de vissage, présente au moins deux des contacts de manière physiquement séparée sur sa surface circonférentielle.

3. Agencement de broche (10) selon la revendication 1 ou 2, dans lequel, dans l'évidement (50), un agencement de contacts complémentaires (60) est fixé sur lequel des contacts complémentaires (66, 68) sont disposés sur différents niveaux radiaux de manière correspondante ou dans différentes zones axiales par rapport à l'axe de vissage (B).

4. Agencement de broche (10) selon l'une quelconque des revendications précédentes, dans lequel les contacts (54, 56) ou/et les contacts complémentaires (66, 68) sont précontraints par ressort.

5. Agencement de broche (10) selon l'une quelconque des revendications précédentes, dans lequel l'élément optique (30) comprend un composant émettant de la lumière, en particulier une source d'éclairage LED, une diode laser ou similaires.

6. Agencement de broche (10) selon l'une quelconque des revendications précédentes, dans lequel l'élément optique (30) comprend un capteur optique, en particulier une barrière lumineuse, un capteur CCD, une caméra ou similaires.

7. Agencement de broche (10) selon l'une quelconque des revendications précédentes, dans lequel l'élément optique (30) comprend une lentille de focalisation ou une lentille de diffusion (48).

8. Agencement de broche (10) selon l'une quelconque des revendications précédentes, dans lequel l'élément optique (30) est pourvu d'un agencement d'étanchéité (44) qui coopère en étanchéité avec la tête de broche (18).

9. Agencement de broche (10) selon l'une quelconque des revendications précédentes, dans lequel l'élément optique (30) est fabriqué avec un carter en matériau durable, en particulier en métal, comme par exemple en acier spécial, ou en matière plastique.

10. Agencement de broche (10) selon la revendication 9, dans lequel le carter est réalisé avec une circonférence extérieure profilée (36), en particulier avec une circonférence extérieure profilée polygonale.

11. Agencement de broche (10) selon l'une quelconque des revendications précédentes, dans lequel sur la tête de broche (18), sur une face frontale et/ou sur une surface circonférentielle (31), ledit au moins un élément optique (30), de préférence une pluralité d'éléments optiques, est prévu(e), dans lequel ledit au moins un élément optique (30) dans une orientation prédéterminée émet de la lumière dans la zone de l'accouplement d'un outil, l'émission de lumière étant de préférence orientée en forme de cône ou en forme de faisceau.

12. Elément optique (30) qui est réalisé pour émettre de la lumière ou/et pour détecter optiquement une zone, l'élément optique (30) pouvant être vissé et fixé dans un évidement (50), dans lequel l'élément optique (30) est pourvu à son extrémité pouvant être vissée dans l'évidement (50) d'au moins deux contacts (54, 56) disposés sur la face frontale sur différents niveaux radiaux par rapport à un axe de vissage (B).
